# EUROPEAN PATENT SPECIFICATION

(11) **EP 4 585 890 B1**
(45) Date of publication and mention of the grant of the patent: **16.09.2026**
(21) Application number: 25151037.6
(22) Date of filing: 09.01.2025
(51) Int. Cl.: G01L 1/24, G01L 25/00, G01M 5/00, G01M 11/08, F03D 13/25, G01L 5/103, G01L 5/105

(54) **SENSOR-EQUIPPED LUG, METHOD OF MEASURING THE TENSILE STRESS SUPPORTED BY SAID SENSOR-EQUIPPED LUG, AND METHOD OF MANUFACTURING A SENSOR-EQUIPPED LUG**
MIT SENSOR AUSGESTATTETE LASCHE, VERFAHREN ZUR MESSUNG DER VON DIESER MIT SENSOR AUSGESTATTETEN LASCHE UNTERSTÜTZTEN ZUGSPANNUNG UND VERFAHREN ZUR HERSTELLUNG EINER MIT SENSOR AUSGESTATTETEN LASCHE
COSSE ÉQUIPÉE D'UN CAPTEUR, PROCÉDÉ DE MESURE DE LA CONTRAINTE DE TRACTION SUPPORTÉE PAR LADITE COSSE ÉQUIPÉE D'UN CAPTEUR, ET PROCÉDÉ DE FABRICATION D'UNE COSSE ÉQUIPÉE D'UN CAPTEUR

(30) Priority: 09.01.2024 ES 202430009
(43) Date of publication of application: 16.07.2025
(73) Proprietor: Inalia Innovacion y Desarrollo, S.L., 01510 Vitoria-Gasteiz (Álava-Araba) (ES)
(72) Inventor: ANDA DIEZ, Alejandro, 01015 Vitoria-Gasteiz (ES); FERNÁNDEZ HERNÁNDEZ, Jaime, 01012 Araba-Álava (ES)
(74) Representative: Del Valle Valiente, Sonia

(56) References cited:
- CN-A- 110 735 845
- NO-B1- 346 724
- US-B2- 9 776 689

## Description

### OBJECT OF THE INVENTION

The present invention falls within the field of the construction of structures equipped with tensioners connected to lugs, and in particular the floating offshore wind energy sector.

A first object of the present invention is a sensor-equipped lug for measuring tensile stress.

A second object of the present invention is a method of measuring the tensile stress supported by a sensor-equipped lug.

### BACKGROUND OF THE INVENTION

A lug is a structure that is configured for connecting a connecting line or cable which, during normal use, will be under stress. For this purpose, the lug normally comprises a plate equipped with an inner hole to which the end of the line or cable is anchored. Lugs are commonly used, for example, for mooring line connections in the platforms on which wind turbines are arranged in the floating wind energy sector.

A lug must be adequately designed and dimensioned to withstand the stress that is transmitted by the cable, both in quantity and direction. Numerical calculation techniques, such as the finite element method, can be used for this purpose. In this context, in order to check whether the stresses on the lug are within the safety margins, it is also important in this field to be able to accurately measure the tensile stress that is supported by a lug.

Today, instrumented shackles equipped with tensile stress sensors are well known. These shackles, similar to a carabiner, are connected to the lugs and provide an approximate measure of the loads supported by the lug. Although this solution allows the load to be measured, it has the drawback that it does not provide any information about the direction of the same.

In short, there is currently a need in this field for systems that allow a more direct, accurate, simple and economical measurement of the load that is supported by a lug.

Document CN110735845A discloses a crane, a tension member and a manufacturing method and preparation device thereof.

Document US9776689B2 discloses a system and method for static and dynamic positioning or motion control of a marine structure.

Document NO346724B1 discloses a mooring system for monitoring tension in a mooring line specially adapted for subsea tension-recording.

### DESCRIPTION OF THE INVENTION

The present invention solves the above problems by attaching two optical fibre wires equipped with Fiber Bragg Grating (FBG) stress sensors to the lug. More specifically, the inventors have discovered that by attaching two optical fibre wires to the edge of the lug, it is possible to infer the quantity of the load, the angle of pull and, if applicable, the angle of off-centre from the stresses measured by the FBG sensors.

This system has the advantage that it can be installed on any pre-existing lug and does not require altering the lug structure in a way that affects its strength. Another advantage when applied to the anchoring of floating wind turbines is that the preparation can be carried out in port when the platform is built, and also the routing is fixed (the instrumented shackles and bolts can have relative movements).

In this document, the term *"angle of pull*" refers to the angle of the cable connected to the lug relative to the vertical within the plane of the lug itself. When the stressed cable is always kept within the plane of the lug, it is said to be a *"centred pull*"*.*

In this document, the *"angle of off-centre"* refers to the angle of the cable connected to the lug relative to the plane of the lug itself. When the stressed cable runs out of the plane of the lug, it is said to be an *"off-centre pull*"*.*

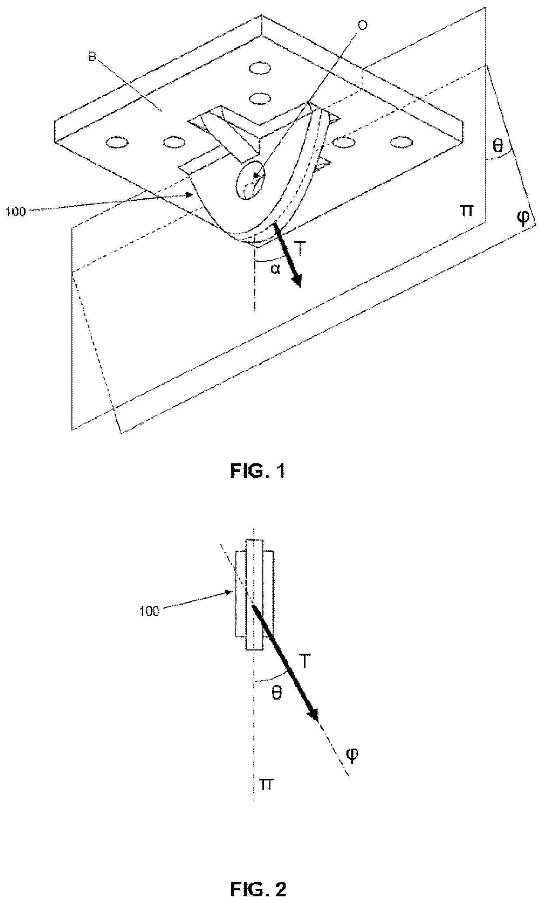

Figures 1 and 2 illustrate in more detail the geometrical considerations relating to the problem solved by the invention. As can be observed, in the case of a centred pull, the cable remains at all times within the plane (π) of the lug, which in this case is vertical, and the angle formed by the stressed cable (T) with a reference direction, in this case also vertical, is the angle (α). In the case of off-centre pull, the stressed cable (T) is contained within a plane (φ) which forms a certain angle with the plane (π) of the lug, the angle of off-centre (θ) being the angle formed by the plane (φ) with the plane (π).

### First aspect: sensor-equipped lug

A first aspect of the invention is defined by claim 1.

In particular, the first aspect of the present invention is directed to a sensor-equipped lug for measuring tensile stress. The lug comprises a body consisting of two lateral faces and an edge located therebetween. The body is pierced by a hole configured for hooking a cable.

The lug comprises two optical fibre wires equipped with a plurality of individual Fiber Bragg Grating (FBG)-type stress sensors arranged in parallel along the edge, particularly in symmetrical positions relative to the plane of symmetry of the lug. The arrangement of two parallel optical fibre wires, as explained later in this document, allows the angle of off-centre to be inferred in cases of off-centre pull, as well as optionally the angle of pull.

An FBG sensor is a type of distributed Bragg reflector implemented in a short optical fibre segment that reflects specified wavelengths and transmits the rest. This is achieved by creating a periodic variation of the refractive index of the fibre. It is known that such fibres can be used as stress sensors. The Wikipedia website includes more specific information: https://en.wikipedia.org/wiki/Fiber_Bragg_grating.

The attachment of the optical fibre wire to the edge of the lug can be carried out in any way as long as slippage is securely prevented. For example, in a particularly preferred embodiment of the invention, glue is used to carry out the attachment of the optical fibre wire. The use of glue is simple and quick and at the same time allows a sufficiently firm attachment.

Moreover, although the optical fibre wire can be glued directly onto the surface of the lug edge, in a preferred embodiment the edge comprises a groove inside of which is arranged the optical fibre wire. This has the advantage that the optical fibre is better protected against external agents. In order to further improve its protection, preferably a moisture-proof sealing material is also included to cover the groove with the optical fibre wire therein.

### Second aspect: method of measuring

A second aspect of the invention is defined by claim 5.

In particular, the second aspect of the present invention is directed to a method of measuring the tensile stress that is supported by a lug as described in the preceding paragraphs.

The method essentially comprises the following steps:
a. Calibrating
   First, an initial lug calibration process is carried out which comprises determining the stresses on each individual stress sensor of the two optical fibre wires attached to the edge of the lug, when calibration tensile forces of different quantities, angles of pull, and optionally angles of off-centre, are applied to said lug. For example, the angles of pull and, when applicable, angles of off-centre are first held constant and calibration tensile forces of different quantities are applied. This process can be repeated for several different combinations of angles of pull and off-centre. The quantity and, when applicable, the angle of off-centre are then kept constant, and calibration tensile forces are applied at different angles of pull. Again, the process is repeated for various combinations of quantity and angle of off-centre. Finally, if angle of off-centre is also to be measured, quantity and angle of pull are kept constant, and calibration tensile forces are applied at different angles of off-centre. Again, the process is repeated for various combinations of quantity and angle of pull.
   A correlation is then established between said stresses obtained by each individual stress sensor and the quantity, the angle of pull and, when applicable, the angle of off-centre of the applied calibration tensile force.
   As will be discussed below, establishing the correlation will involve determining an appropriate parameter and then calculating the correlation relationship linking the measured stresses to the value of said parameter. Representing the measured stresses in the form of a stress versus angle of pull or off-centre graph is a particularly useful manner of carrying out this step, although it is also possible to carry it out analytically, e.g. through equations.
   The method of calibration disclosed is performed only once when the sensor-equipped lug of the invention is designed or installed at the location where it is to be used. After carrying out this calibration process, which is usually an analytical one using FEM, the sensor-equipped lug is ready to take the necessary measurements as disclosed below.
b. Measuring
   Subsequently, after carrying out the calibration, the quantity, angle of pull and, when applicable, the angle of off-centre of the tensile force that is supported by the lug during normal use is determined. These parameters are determined from the stresses obtained by the individual stress sensors of the two optical fibre wires, using the correlations obtained in the initial calibration process.

The method of measuring disclosed has essentially two variants depending on whether the lug has a single optical fibre wire (which is not part of the invention, mainly applicable to centred pull) or whether it has two optical fibre wires (the method of the invention, applicable to both centred and off-centre pull).

### First variant (not according to the invention): one optical fibre wire

This variant is directed to the method when the lug comprises a single optical fibre wire attached along the edge. In this case, it is possible to obtain both the quantity of the tensile force applied and the angle of pull of said tensile force. Therefore, this first variant of the method is mainly applicable to centred pull cases. The methods for calculating said parameters are described in detail below.

### a. Calculating the quantity of the tensile force applied

In this case, the method allows the value of the quantity of the tensile force applied to be determined by carrying out the following steps:
1. Constructing graphs of the stress measured by the optical fibre wire versus the angular position for a set of calibration tensile forces with different quantities.
   A series of calibration tensile forces of known quantity are applied according to a constant angle of pull. This step can be done experimentally, although in the case of mooring lines in floating wind energy, the stresses and sizes are so large that the application of calibration tensile forces is preferably carried out by analytical methods, e.g. using FEM (Finite Element Method). The application of this set of known tensile forces can be repeated for various angles of pull. Thus, for a given angle of pull, the values of the point stress at each of the measuring points of the optical fibre wire corresponding to each of the calibration tensile forces applied are obtained. A stress versus angular position curve can then be constructed for each measuring point corresponding to each quantity of the calibration tensile force. The curves corresponding to different quantities of the calibration tensile forces can be represented on the same graph.
2. Determining a parameter of said graphs that correlates with the quantity of the calibration tensile force applied.
   If the stress versus angular position curves corresponding to various quantities of the calibration stress are plotted on the same graph, keeping the angle of pull constant, it can be observed that certain parameters are correlated with the quantity of the stress.
   For example, the value of the maximum stress in the stress versus angular position graph is taken as the parameter correlated with the quantity of the calibration tensile force applied. In other words, the higher the stress at the maximum of the curve, the higher the value of the calibration quantity corresponding to that curve.
3. Calculating the correlation ratio between said parameter and the quantity of the calibration tensile force applied.
   The correlation can be established analytically or graphically, and allows the quantity of the tensile force applied to be obtained from the position of the maximum stress on the corresponding curve.
4. Subsequently, during normal use of the lug, determining the value of the quantity of a tensile force applied from the stresses measured by the optical fibre wire and the correlation ratio calculated in the previous step.
   The first three steps described above are part of the calibration process, which in principle is only carried out once before the lug is put into production. Once the lug has been installed, i.e. during normal use of the lug, the final step consists of inferring the quantity of the tensile force from the stresses measured by the optical fibre wire.

### b. Calculating the angle of pull of the tensile force applied

In this case, the method allows determining the value of the angle of pull of the tensile force applied by carrying out the following steps:
1. Constructing graphs of the stress measured by the optical fibre wire versus the angular position for a set of calibration tensile forces with different angles of pull.
   For this purpose, a constant calibration tensile force of known value is applied at different angles of pull. As in the previous case, this step can be carried out experimentally or analytically. This process can be repeated for different calibration tensile forces and, for each tensile force and angle of pull, the values of the point stress at each of the measuring points of the optical fibre wire are obtained. A curve can then be constructed for each angle of pull representing the stress at each measuring point, each measuring point being defined by its angular position on the lug.
2. Determining a parameter of the graphs that correlates with the angle of pull of the calibration tensile force applied.
   If the stress versus angular position curves corresponding to various angles of pull are plotted on the same graph, keeping the quantity constant, it can be observed that certain parameters are correlated with the angle of pull.
   For example, one parameter that correlates with the angle of pull of the calibration tensile force applied is the position of the maximum of the stress versus angular position graph. Indeed, if stress versus angular position is plotted, it can be observed that each curve starts from a minimum value, increases to a maximum, and subsequently decreases. It can be observed that the angular position at which the maximum stress occurs is related to the angle of pull. It is also noted that the angular position of the maximum stress does not necessarily coincide with the angle of pull, but depends on the configuration of the lug. In view of this, a correlation can be found between the position of the maximum stress on this graph and the angle of pull.
   Another parameter that correlates with the angle of pull of the calibration tensile force applied is the slope of the stress versus angular position graph at angular positions higher than that at which the maximum is found, specifically at angular positions at least 4° higher than that at which the maximum of said graph is found. Indeed, in the stress versus angular position graph, it can be observed that the decreasing slope of the stress at angular positions above the maximum, specifically at least 4° above, decreases as the angle of pull increases. Therefore, a correlation can be established between the slope of the stress at angular positions above the maximum stress and the angle of pull.
3. Calculating the correlation ratio between said parameter and the angle of pull of the calibration tensile force applied.
   This correlation can be established analytically or graphically, and allows an angle of pull to be obtained from the position of the maximum stress, or from the slope of the stress at angular positions at the maximum stress.
4. Subsequently, during normal use of the lug, determining the value of the angle of pull of a tensile force applied from the stresses measured by the optical fibre wire and the correlation ratio calculated in the previous step.
   The first three steps described above are part of the calibration process, which in principle is only carried out once before the lug is put into production. Once the lug has been installed, i.e. during normal use of the lug, the last step consists of inferring the angle of pull from the stresses measured by the optical fibre wire.

Therefore, this first variant of the method which does not form part of the invention makes it possible to determine the quantity and angle of pull of a tensile force applied to the lug from the stresses obtained by a single optical fibre wire arranged along the edge of the lug. This method is particularly useful in centred pull cases.

### Second variant (according to the invention): two optical fibre wires

A preferred embodiment of the invention is directed to the method when the lug comprises two optical fibre wires arranged in parallel along the edge. In this case, the quantity of the tensile force applied, the angle of pull and, if desired, also the angle of off-centre can be obtained. Because of this, this second variant of the method is particularly useful in off-centre pull cases. The methods for calculating said parameters are described in detail below.

### a. Calculating the quantity of the tensile force applied

To obtain the quantity of the tensile force, the method for a single-wire lug described earlier in this document can be used, adapted to the case where the lug has two optical fibre wires by simply averaging the two graphs obtained. In other words, for cases where the lug has two measuring wires, calculating the quantity of the tensile force applied is carried out by means of the following steps:
1. Constructing graphs consisting of stress versus angular position by averaging the graph corresponding to one optical fibre wire and the graph corresponding to the other optical fibre wire for a set of calibration tensile forces with different quantities. As described above, for each set of different quantities, angle of pull and angle of off-centre are kept constant. The calibration tensile forces are applied experimentally or, preferably, using analytical methods such as FEM.
2. Determining a parameter of the composite graphs that correlates with the quantity of the calibration tensile force applied.
   Also similar to the previous case, the parameter that correlates with the quantity of the calibration tensile force applied is the value of the maximum stress in the stress versus angular position graph. The higher the tensile force applied, the higher the stress value corresponding to the maximum of the corresponding curve.
3. Calculating the correlation ratio between said parameter and the quantity of the calibration tensile force applied, either graphically or analytically.
4. Finally, during normal use of the lug, determining the value of the quantity of a tensile force applied from the stress measured by the optical fibre wires and the correlation ratio calculated in the previous step.

### b. Calculating the angle of pull of the tensile force applied

The angle of pull when there are two optical fibre wires is also calculated in a manner equivalent to that described above, except that the two graphs obtained are averaged. In other words, for cases where the lug has two measuring wires, the value of the angle of pull of the tensile force applied is carried out by means of the following steps:
1. Constructing graphs consisting of stress versus angular position by averaging the graph corresponding to one optical fibre wire and the graph corresponding to the other optical fibre wire for a set of calibration tensile forces at different angles of pull.
2. Determining a parameter of the composite graphs that correlates with the angle of pull of the calibration tensile force applied.
   As in the previous case, the parameter correlating with the angle of pull of the calibration tensile force applied is chosen from: the position of the maximum of the composite stress versus angular position graph; and the slope of said composite stress versus angular position graph at angular positions greater than that at which the maximum is found. Preferably, the slope of the composite stress versus angular position graph is taken at angular positions at least 4° greater than that at which the maximum of said graph is found.
3. Calculating the correlation ratio between said parameter and the angle of pull of the calibration tensile force applied.
4. Subsequently, during normal use of the lug, determining the value of the angle of pull of a tensile force applied from the stresses measured by the optical fibre wires and the correlation ratio calculated in the previous step.

### c. Calculating the angle of off-centre of the tensile force applied

The method for determining the value of the angle of off-centre using a sensor-equipped lug with two optical fibre wires comprises the following steps:
1. Constructing a graph of stress measured versus the angular position for each optical fibre wire for a set of calibration tensile forces with different angles of off-centre.
   In other words, essentially, in this step, the same steps are carried out as for the equivalent step described in the previous sections, although in this case the calibration stresses change angle of off-centre while keeping the quantity and angle of pull constant. This process can be repeated for different quantities and angles of pull.
2. Determining a parameter of the pair of graphs that correlates with the angle of off-centre of the calibration tensile force applied.
   Again, parameters are sought in the obtained graphs the variation of which is correlated with the angle of off-centre. Specifically, the inventors of the present application have found that the difference in stress between the curve corresponding to one optical fibre wire and the curve corresponding to the other optical fibre wire correlates with the angle of off-centre.
   Indeed, it can be observed that the curves of the two lug wires when an off-centre stress is applied have essentially the same shape, although one of them is vertically displaced by a specified distance. The distance between the two graphs, i.e. the difference between the graph corresponding to one optical fibre wire and the graph corresponding to the other optical fibre wire, is greater the greater the angle of off-centre. In other words, the angle of off-centre is proportional to the distance between the two curves corresponding to each of the two wires.
3. Calculating the correlation ratio between said parameter and the angle of off-centre of the calibration tensile force applied.
   As in the previous case, this correlation can be established analytically or graphically, and allows an angle of off-centre to be obtained from the vertical distance between the curve corresponding to one optical fibre wire and the curve corresponding to the other optical fibre wire.
4. During normal use of the lug, determining the value of the angle of off-centre of a tensile force applied from the stresses measured by the optical fibre wires and the calculated correlation ratio.
   During normal use of the lug, the final step consists of inferring the angle of off-centre from the stresses measured by the optical fibre wires.

Ultimately, this second variant of the method makes it possible to obtain the quantity, angle of off-centre and/or angle of pull in cases of off-centre pull when the lug has two optical fibre wires arranged in parallel along its edge.

### BRIEF DESCRIPTION OF DRAWINGS

Figure 1 shows a perspective view of a conventional lug.
Figure 2 shows a profile view of a conventional lug.
Figures 3a-c show views of a lug equipped with an optical fibre wire not according to the present invention.
Figure 4 shows a perspective view of a lug equipped with an optical fibre wire not according to the present invention.
Figure 5 shows another perspective view of a lug equipped with an optical fibre wire not according to the present invention.
Figure 6 shows schematically how to obtain a stress versus angular position graph in a lug fitted with an optical fibre wire.
Figure 7 shows graphs of stress versus angular position for various quantities of stress while keeping the angles of pull and calibration tensile force applied constant.
Figure 8 shows stress versus angular position graphs for various angles of centred pull while keeping the quantity and angle of off-centre of the tensile force applied constant.
Figure 9 shows a detail of the graph in figure 7 where the maxima of the stress graphs obtained are located.
Figure 10 shows another detail of the graph in figure 7 where is the approximately linear decreasing portion that occurs above the position of the maximum stress is located.
Figures 11a-c show views of a lug equipped with two optical fibre wires according to the present invention.
Figure 12 shows a perspective view of a lug with two optical fibre wires according to the present invention.
Figure 13 shows another perspective view of a lug with two optical fibre wires according to the present invention.
Figures 14a and 14b show graphs of the stresses captured by the two optical fibre wires respectively for an angle of off-centre of 1° and for an angle of off-centre of 2.5° while keeping the quantity and angle of pull of the tensile force applied constant.

### PREFERRED EMBODIMENT OF THE INVENTION

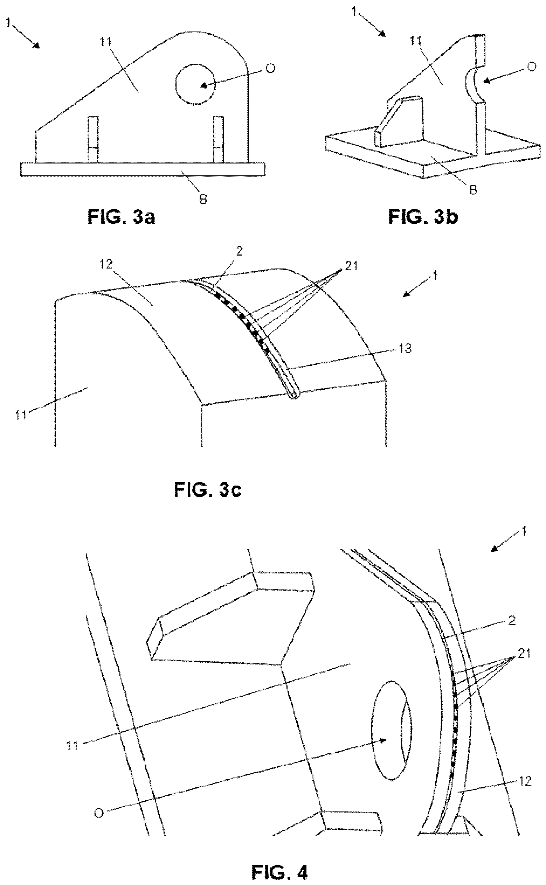

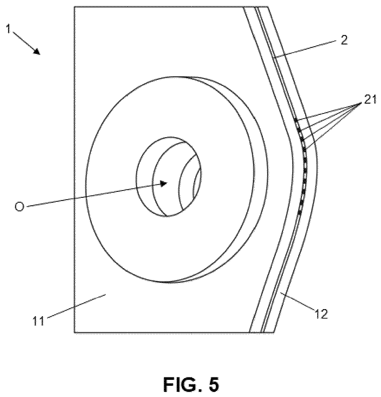

Figures 3-4 show various views of a lug (1) equipped with a single optical fibre wire (2) which is not according to the present invention. As can be observed, the lug (1) has two parallel lateral faces (11) and an edge (12) that has a straight section followed by a circular section. The lug (1) is attached to a base board (B) which will ultimately support the tensile forces. The body of the lug (1) has a hole (O) designed for attaching the cable or line to be attached thereto. In this case, the hole (O) is round, although other options are possible. Figure 5 shows another exemplary embodiment of a lug (1) which has a different shape, although it has the same aforementioned elements.

In either case, the edge (12) of the lug (1) has a groove (13) running in parallel to and centred in relation to the lateral faces (11). The optical fibre wire (2) is glued with a suitable glue into this groove (13) and, although not explicitly shown in the figures, a sealing material covers the groove (13) to protect the optical fibre wire (2). Also visible in the figures are the individual stress sensors (21), or measuring points, which are integrated in the optical fibre wire (21) itself.

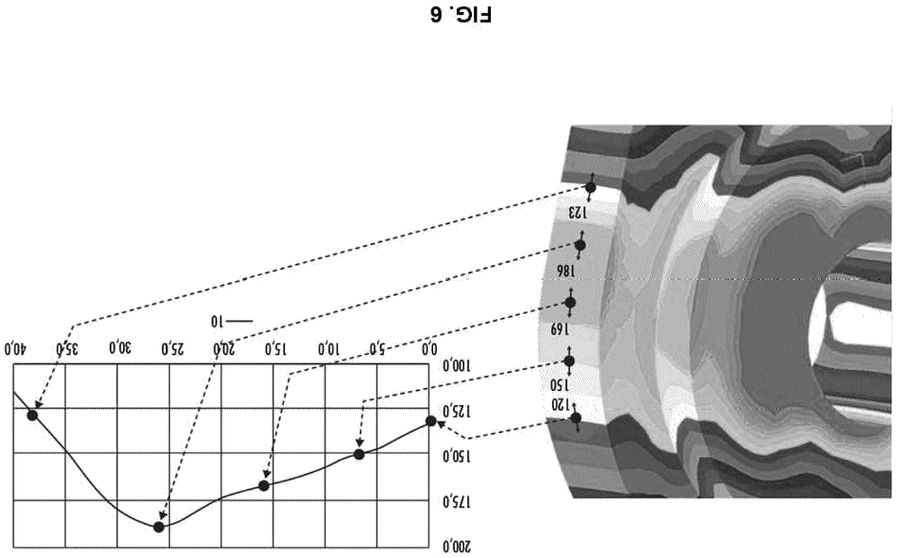

Figure 6 schematically shows the data obtained from a sensor-equipped lug (1) as shown in the above figures. The drawing on the left shows the stresses at each point of the lug (1) when a tensile force is applied at an angle of pull α=10°. Although the colours are not visible in the figure, it is evident that the areas of maximum stress are in the central area of the image shown, with the stress decreasing when moving away from the central area. In this figure, an optical fibre wire (2) is assumed to be installed with five measuring points located along the central line of the edge (12) of the lug (1). These measuring points provide the stresses that are represented in the stress graph shown on the right, where the horizontal axis corresponds to the angular position of the measuring point along the edge (12) of the lug (1). Counter-intuitively, it can be observed that the maximum stress occurs at the angular position corresponding to 25°, relatively far from the 10° angle of pull.

### Calculating the quantity and angle of pull using a lug with one optical fibre wire

The following describes how to infer the quantity (T) and angle of pull (α) in a lug (1) equipped with a single optical fibre wire (2).

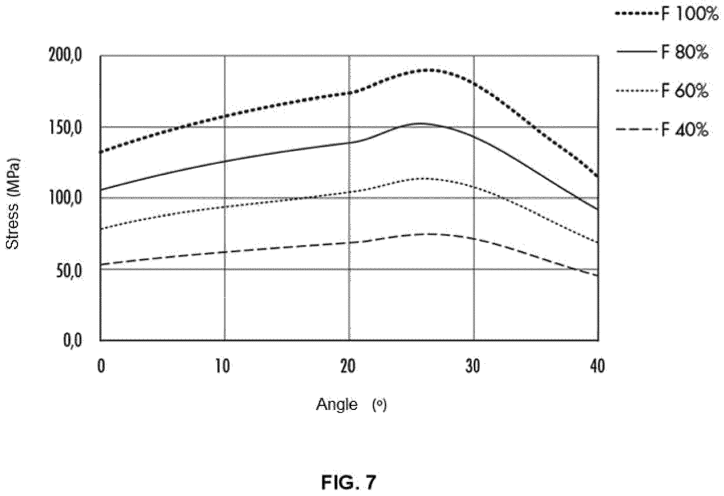

Figure 7 shows an exemplary graph including several curves similar to those in figure 6 obtained from a sensor-equipped lug (1). Each of the curves corresponds to a quantity (T_{c}) of the calibration tensile force, in this case four quantities (T_{c}) of the calibration tensile force which are each 20 % greater than the previous one. For all curves, the value of the angle of pull (α) and the angle of off-centre (θ) are kept constant. It can be observed that the curves are similar and essentially parallel, the curves corresponding to higher tensile force quantities (T_{c}) reaching higher stress values. The value of the maximum of each of the curves is related to the quantity (T_{c}) of the calibration tensile force applied in each case. This information allows a correlation between the two parameters to be established, either graphically or analytically, by means of an equation. Thus, for these specific angles of pull (α) and off-centre (θ), it is possible to deduce the quantity (T) of the tensile force applied using this correlation.

By repeating this process for a sufficiently large set of combinations of angles of pull (α) and angles of off-centre (θ), correlations are obtained which make it possible to obtain the quantity (T) of the tensile force applied in many different situations.

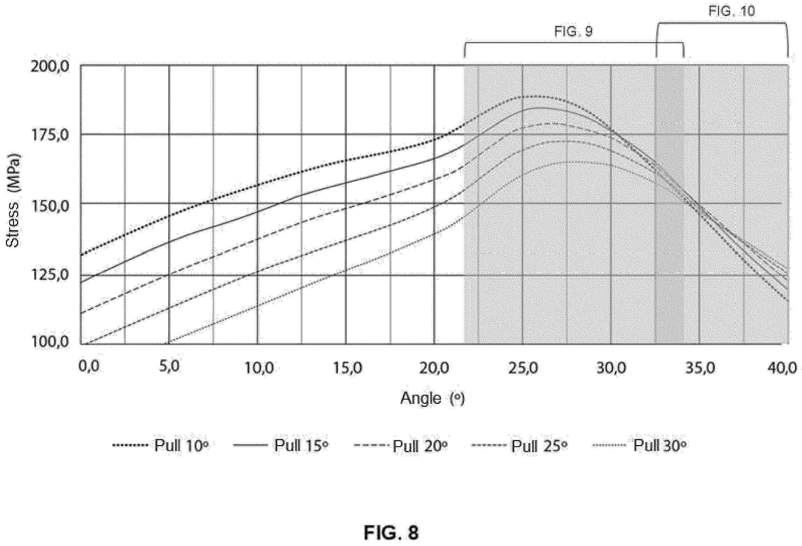

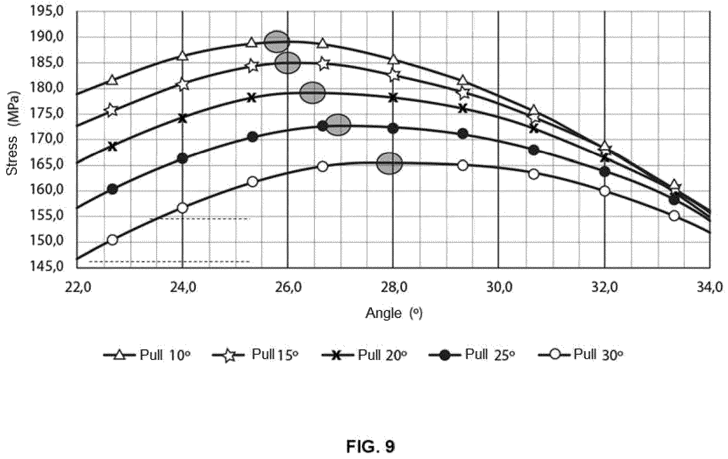

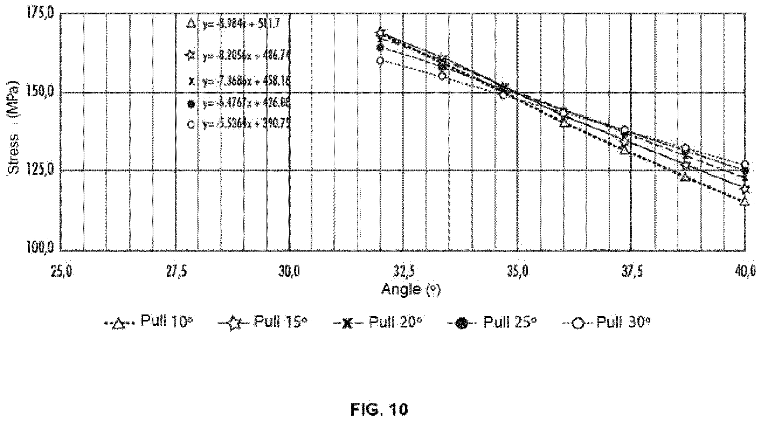

Figure 8 shows an exemplary graph including another set of curves obtained from a sensor-equipped lug (1). Figures 9 and 10 below show details of the graph in figure 8. Each of the curves corresponds to a specific angle of pull (α) in an installation to which a series of calibration stresses with known angles of pull have been applied: 10°, 15°, 20°, 25° and 30°. Naturally, in this case the quantity (T) and the angle of off-centre (θ) are kept constant. Again, as can be observed, all the curves have a similar shape starting with an increasing section until a maximum is reached, followed by a decreasing section almost in a straight downward line. As explained below, the method makes it possible to obtain the angle of pull (α) of a sensor-equipped lug (1) during normal use once the calibration process has been carried out using the curves in graph 8.

Indeed, figure 9 shows a slice of the graph in figure 8, specifically that which shows the maxima of every curve. It is clear that the angular position at which the maximum is located varies as a function of the angle of pull (α). Thus, for example, for an angle of pull α=10°, the maximum occurs at the angular position 25.8°. However, for an angle of pull of α=25°, the maximum occurs at the angular position 26.9°. Therefore, it is possible to establish a correlation between the maximum of the curves and the angle of pull (α). This correlation can be established in any known way, either graphically or analytically by means of an equation. In any case, the end result is that, given the position of the maximum of a stress versus angular position curve obtained with the same sensor-equipped lug (1), the angle of pull (α) is obtained.

Alternatively, for calibrating, it is possible to use a parameter other than the maximum of the stress versus angular position curves of figure 8. Figure 10 shows another slice of the graph in figure 8, specifically the part where, after the maximum, the curves descend almost in a straight line. In this area of the graph, it can be observed how the slope of each curve is inversely proportional to the angle of pull (α). For example, the slope of the curve corresponding to an angle of pull α=10° is significantly greater than the slope of the curve corresponding to an angle of pull α=30°. This is clearer from the approximations obtained using linear regression techniques shown in the graph in figure 10. In short, as in the previous case with the position of the maxima, it is possible here to find a correlation between the slope of the curves and the angle of pull (α). Again, this correlation can be simply graphical, or it can be determined analytically through an equation. The end result is that, given the slope of a stress versus angular position curve obtained with the same sensor-equipped lug (1), the angle of pull (α) is obtained.

By repeating this process for a set of different quantities (T) and angles of off-centre (θ), correlations are obtained that allow the angle of pull (α) of the tensile force applied to be obtained in very different situations.

Once the calibration process described in the previous paragraphs has been completed, the sensor-equipped lug (1) in question can normally be installed, for example, by cooperating in the attachment of a floating wind turbine to the seabed by means of suitable cables. A data connection enables the data obtained by the optical fibre wire (2) arranged at the edge (12) of the lug (1) to be obtained. Then, when the system is under stress, the stresses captured by the measuring points (21) of the optical fibre wire (2) are obtained and the stress versus angular position curve is constructed. In this context it must be noted that, once the optical fibre wire (2) is attached to the lug (1), the angular position of each measuring point (21) of the optical fibre wire (2) remains unchanged.

Then, to obtain the quantity (T) of the tensile force applied, it is sufficient to determine the value of the maximum stress of the curve obtained and to apply the correlation between said maximum value and the quantity (T) of the tensile force.

As for the angle of pull (α), in case the position of the maximum is used as an indicator of the angle of pull, once the stress-angular position curve corresponding to the installed sensor-equipped lug (1) is obtained, it is determined at which angular position the maximum occurs. The correlation between the angular position of the maximum and the angle of pull (α) obtained during the calibration process is then used to obtain the specific angle of pull (α) corresponding to the tensile force applied.

Similarly, if the slope of the curve is used as an indicator of the angle of pull, once the stress-angular position curve corresponding to the installed sensor-equipped lug (1) is obtained, the slope of the curve is determined over the given range of angular positions. The correlation between slope and angle of pull (α) obtained during the calibration process is then used to obtain the specific angle of pull (α) corresponding to the tensile force applied.

### Calculating quantity and angle of pull and off-centre using a lug with two optical fibre wires

The following describes how to infer the quantity (T), angle of pull (α) and angle of off-centre (θ) in an installed lug (1) subjected to off-centre pull.

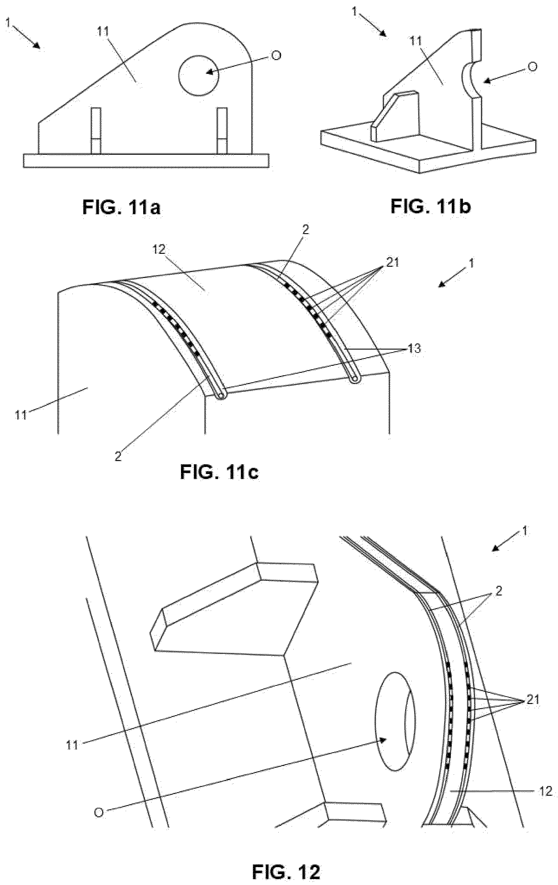

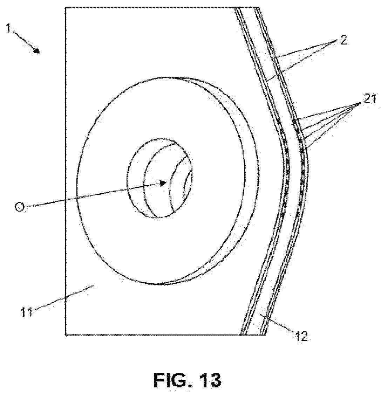

In this case, the sensor-equipped lug (1) must have two optical fibre wires (2) installed, as shown in the various views in figures 11-12. The lug (1) in these figures also has two parallel lateral faces (11) and a rounded edge (12) with the same shape as shown in figures 3-4. In this case, however, the edge (12) has two grooves (13) located parallel to each other along the edge parallel to the plane of the lateral faces (11). Each of the grooves (13) has a corresponding optical fibre wire (2) housed therein and attached by means of a suitable adhesive. Both grooves (13) are also coated with a moisture-proof sealing material. Figure 13 shows another exemplary embodiment of a sensor-equipped lug (1).

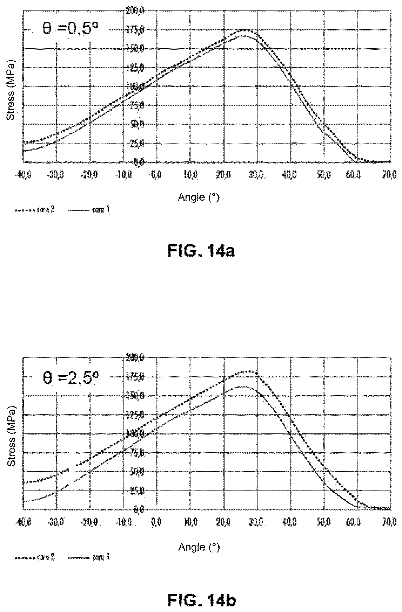

In this case, calibration tensile forces with different angles of off-centre (θ) are applied. Figures 14a and 14b show respectively the stresses captured by the different measuring points (21) of both optical fibre wires (2) when a specified stress is applied to the sensor-equipped lug (1) with an angle of off-centre of θ=0.5° and with an angle of off-centre θ=2.5°. Figure 14a shows that at an angle of off-centre of θ=0.5°, the stress curve of one optical fibre wire (2) and the stress curve of the other optical fibre wire (2) are vertically separated by a specified and approximately fixed distance. However, graph 14b shows that for an angle of off-centre of θ=2.5°, the separation distance is significantly larger. Therefore, a correlation can be established between the vertical separation distance of the two curves and the angle of off-centre (θ). This relationship can be graphical, or it can be obtained analytically by means of an equation.

Thus, once the sensor-equipped lug (1) is installed and subjected to a specified tensile force, a user can extract the stresses obtained by the measuring points (21) of the two optical fibres (2) and represent the same on a graph. The two curves are approximately parallel and spaced a specified distance apart. The correlation calculated in the previous step is then used to determine the corresponding angle of off-centre (θ).

In a sensor-equipped lug (1) with two optical fibre wires (2), it is also possible to determine the quantity (T) and the angle of pull (α). For this purpose, calibration processes similar to those described above in this document in relation to centred pull are carried out, although for each calibration tensile force a so-called composite graph is obtained by averaging the two curves, one corresponding to each optical fibre wire (2).

## Claims

1. A sensor-equipped lug (1) for measuring tensile force, wherein the lug (1) comprises a body formed by two lateral faces (11) and an edge (12) located therebetween which is pierced by a hole (O) configured for hooking a cable, **characterised in that** it further comprises two optical fibre wires (2) each equipped with a plurality of individual Fiber Bragg Grating-type stress sensors (21) attached along the edge (12), wherein the two optical fibre wires (2) are arranged in parallel in symmetrical positions in relation to a plane of symmetry of the lug (1).

2. The sensor-equipped lug (1) according to claim 1, further comprising glue to carry out the attachment of the optical fibre wires (2).

3. The sensor-equipped lug (1) according to any of the preceding claims wherein the edge (12) comprises two grooves (13) inside of which is arranged the optical fibre wires (2).

4. The sensor-equipped lug (1) according to claim 3, further comprising a moisture-proof sealing material which covers each groove (13) with the optical fibre wire (2) therein.

5. A method of measuring the tensile force supported by a sensor-equipped lug (1) according to any of the preceding claims, **characterised in that** it comprises the following steps:
a. carrying out an initial calibration process of the lug (1), comprising determining the stresses on each individual stress sensor (21) of the two optical fibre wires (2) attached to the edge (12) of the lug (1), when calibration tensile forces of different quantities (T_{c}), different angles of pull (α_{c}), and optionally, different angles of off-centre (θ_{c}) are applied to said lug (1), and correlating said stresses determined by each individual stress sensor (21) with the quantity (T_{c}), the angle of pull (α_{c}) and, where applicable, the angle of off-centre (θ_{c}) of the calibration tensile stress applied; and
b. subsequently, determining the quantity (T), the angle of pull (α) and, if applicable, the angle of off-centre (θ) of the tensile force supported by the lug (1) during normal use from the stresses obtained by the individual stress sensors (21) of the two optical fibre wires (2), using the correlations obtained in the initial calibration process.

6. The method according to claim 5, comprising determining the value of the quantity (T) of the tensile force applied by means of the following steps:
- constructing composite graphs of stress versus angular position by averaging the graph corresponding to one optical fibre wire (2) and the graph corresponding to the other optical fibre wire (2) for a set of calibration tensile forces with different quantities (T_{c});
- determining a parameter of the composite graphs that correlates with the quantity (T_{c}) of the calibration tensile force applied;
- calculating the correlation ratio between said parameter and the quantity (T_{c}) of the calibration tensile force applied; and
- subsequently, during normal use of the lug (1), determining the value of the quantity (T) of a tensile force applied from the stresses measured by the optical fibre wires (2) and the correlation ratio calculated in the previous step.

7. The method according to claim 6, wherein the parameter that correlates with the quantity (T_{c}) of the calibration tensile force applied is the value of the maximum stress in the stress versus angular position graph.

8. The method according to any of claims 6-7, further comprising determining the value of the angle of pull (α) of the tensile force applied by means of the following steps:
- constructing composite graphs of stress versus angular position by averaging the graph corresponding to one optical fibre wire (2) and the graph corresponding to the other optical fibre wire (2) for a set of calibration tensile forces with different angles of pull (α_{c});
- determining a parameter of the composite graphs that correlates with the angle of pull (α_{c}) of the calibration tensile force applied;
- calculating the correlation ratio between said parameter and the angle of pull (α_{c}) of the calibration tensile force applied; and
- subsequently, during normal use of the lug (1), determining the value of the angle of pull (α) of a tensile force applied from the stresses measured by the optical fibre wires (2) and the correlation ratio calculated in the previous step.

9. The method according to claim 8, wherein the parameter correlating with the angle of pull (α_{c}) of the calibration tensile force applied is chosen from: the position of the maximum of the composite stress versus angular position graph; and the slope of said composite stress versus angular position graph at angular positions greater than that at which the maximum is found.

10. The method according to claim 9, wherein the slope of the composite stress versus angular position graph is taken at angular positions at least 4° higher than that at which the maximum is found in said graph.

11. The method according to any one of claims 6-10, further comprising determining the value of the angle of off-centre (θ_{c}) by means of the following steps:
- constructing a graph of the stress measured versus the angular position for each optical fibre wire (2) for a set of calibration tensile forces with different angles of off-centre (θ_{c});
- determining a parameter of the pair of graphs that correlates with the angle of off-centre (θ_{c}) of the calibration tensile force applied;
- calculating the correlation ratio between said parameter and the angle of off-centre (θ_{c}) of the calibration tensile force applied; and
- during normal use of the lug (1), determining the value of the angle of off-centre (θ) of a tensile force applied from the stresses measured by the optical fibre wires (2) and the calculated correlation ratio.

12. The method according to claim 11, wherein the parameter correlating with the angle of off-centre (θ_{c}) of the calibration tensile force applied is the difference in stress between the graph corresponding to one optical fibre wire (2) and the graph corresponding to the other optical fibre wire (2).

## Patentansprüche

1. Mit Sensor ausgestattete Lasche (1) zum Messen der Zugkraft, wobei die Lasche (1) einen Körper umfasst, der aus zwei Seitenflächen (11) und einer dazwischen liegenden Kante (12) besteht, die durch ein Loch (O) durchbohrt ist, das zum Einhaken eines Kabels konfiguriert ist, **dadurch gekennzeichnet, dass** sie ferner zwei Glasfaserdrähte (2) umfasst, die jeweils mit einer Vielzahl von einzelnen Spannungssensoren (21) vom Typ Faser-Bragg-Gitter ausgestattet sind, die entlang der Kante (12) befestigt sind, wobei die beiden Glasfaserdrähte (2) parallel in symmetrischen Positionen in Bezug auf eine Symmetrieebene der Lasche (1) angeordnet sind.

2. Mit Sensor ausgestattete Lasche (1) gemäß Anspruch 1, ferner umfassend Klebstoff zum Befestigen der Glasfaserdrähte (2).

3. Mit Sensor ausgestattete Lasche (1) gemäß einem der vorhergehenden Ansprüche, wobei die Kante (12) zwei Nuten (13) umfasst, in denen die Glasfaserdrähte (2) angeordnet sind.

4. Mit Sensor ausgestattete Lasche (1) gemäß Anspruch 3, ferner umfassend ein feuchtigkeitsdichtes Dichtungsmaterial, das jede Nut (13) mit dem darin befindlichen Glasfaserdraht (2) bedeckt.

5. Verfahren zur Messung der von einer mit Sensor ausgestatteten Lasche (1) unterstützten Zugkraft gemäß einem der vorhergehenden Ansprüche, **dadurch gekennzeichnet, dass** es die folgenden Schritte umfasst:
a. Durchführen eines anfänglichen Kalibrierungsprozesses der Lasche (1), umfassend das Bestimmen der Spannungen an jedem einzelnen Spannungssensor (21) der beiden Glasfaserdrähte (2), die an der Kante (12) der Lasche (1) befestigt sind, wenn Kalibrierungszugkräfte unterschiedlicher Größe (T_{c}), unterschiedliche Zugwinkel (α_{c}) und gegebenenfalls unterschiedliche Versatzwinkel (θ_{c}) auf die Lasche (1) ausgeübt werden, und Korrelieren der von jedem einzelnen Spannungssensor (21) bestimmten Spannungen mit der Größe (T_{c}), dem Zugwinkel (α_{c}) und gegebenenfalls dem Versatzwinkel (θ_{c}) der aufgebrachten Kalibrierungszugspannung; und
b. anschließend Bestimmen der Größe (T), des Zugwinkels (α) und, falls zutreffend, des Versatzwinkels (θ) der von der Lasche (1) im Normalbetrieb unterstützten Zugkraft, aus den von den einzelnen Spannungssensoren (21) der beiden Glasfaserdrähte (2) erhaltenen Spannungen, unter Verwendung der im anfänglichen Kalibrierungsprozess erhaltenen Korrelationen.

6. Verfahren gemäß Anspruch 5, umfassend das Bestimmen des Wertes der Größe (T) der aufgebrachten Zugkraft mittels der folgenden Schritte:
- Erstellen von zusammengesetzten Graphen der Spannung in Abhängigkeit von der Winkelposition durch Mittelwertbildung aus dem Graphen, der einem Glasfaserdraht (2) entspricht, und dem Graphen, der dem anderen Glasfaserdraht (2) entspricht, für einen Satz von Kalibrierungszugkräften mit unterschiedlichen Größen (T_{c});
- Bestimmen eines Parameters der zusammengesetzten Graphen, der mit der Größe (T_{c}) der aufgebrachten Kalibrierungszugkraft korreliert;
- Berechnen des Korrelationsverhältnisses zwischen dem Parameter und der Größe (T_{c}) der aufgebrachten Kalibrierungszugkraft; und
- im Normalbetrieb der Lasche (1) anschließendes Bestimmen des Wertes der Größe (T) einer aufgebrachten Zugkraft aus den von den Glasfaserdrähten (2) gemessenen Spannungen und dem in dem vorherigen Schritt berechneten Korrelationsverhältnis.

7. Verfahren gemäß Anspruch 6, wobei der Parameter, der mit der Größe (T_{c}) der aufgebrachten Kalibrierungszugkraft korreliert, der Wert der maximalen Spannung in dem Spannungs-Winkelpositions-Graphen ist.

8. Verfahren gemäß einem der Ansprüche 6-7, ferner umfassend das Bestimmen des Wertes des Zugwinkels (α) der aufgebrachten Zugkraft mittels der folgenden Schritte:
- Erstellen von zusammengesetzten Graphen der Spannung in Abhängigkeit von der Winkelposition durch Mittelwertbildung aus dem Graphen, der einem Glasfaserdraht (2) entspricht, und dem Graphen, der dem anderen Glasfaserdraht (2) entspricht, für einen Satz von Kalibrierungszugkräften bei unterschiedlichen Zugwinkeln (α_{c});
- Bestimmen eines Parameters der zusammengesetzten Graphen, der mit dem Zugwinkel (α_{c}) der aufgebrachten Kalibrierungszugkraft korreliert;
- Berechnen des Korrelationsverhältnisses zwischen dem Parameter und dem Zugwinkel (α_{c}) der aufgebrachten Kalibrierungszugkraft; und
- im Normalbetrieb der Lasche (1) anschließendes Bestimmen des Wertes der Zugwinkels (α) einer aufgebrachten Zugkraft aus den von den Glasfaserdrähten (2) gemessenen Spannungen und dem in dem vorherigen Schritt berechneten Korrelationsverhältnis.

9. Verfahren gemäß Anspruch 8, wobei der Parameter, der mit dem Zugwinkel (α_{c}) der aufgebrachten Kalibrierungszugkraft korreliert, ausgewählt wird aus: der Position des Maximums des zusammengesetzten Spannungs-Winkelpositions-Graphen; und der Steigung des zusammengesetzten Spannungs-Winkelpositions-Graphen bei Winkelpositionen, die größer sind als die, bei der das Maximum gefunden wird.

10. Verfahren gemäß Anspruch 9, wobei die Steigung des zusammengesetzten Spannungs-Winkelpositions-Graphen bei Winkelpositionen gemessen wird, die mindestens 4° höher liegen als die, bei der das Maximum in dem Graphen gefunden wird.

11. Verfahren gemäß einem der Ansprüche 6-10, ferner umfassend das Bestimmen des Versatzwinkels (θ_{c}) mittels der folgenden Schritte:
- Erstellen eines Graphen der gemessenen Spannung in Abhängigkeit von der Winkelposition für jeden Glasfaserdraht (2) für einen Satz von Kalibrierungszugkräften bei unterschiedlichen Versatzwinkeln (θ_{c});
- Bestimmen eines Parameters des Paares von Graphen, der mit dem Versatzwinkel (θ_{c}) der aufgebrachten Kalibrierungszugkraft korreliert;
- Berechnen des Korrelationsverhältnisses zwischen dem Parameter und dem Versatzwinkel (θ_{c}) der aufgebrachten Kalibrierungszugkraft; und
- im Normalbetrieb der Lasche (1) Bestimmen des Wertes des Versatzwinkels (θ) einer aufgebrachten Zugkraft aus den von den Glasfaserdrähten (2) gemessenen Spannungen und dem berechneten Korrelationsverhältnis.

12. Verfahren gemäß Anspruch 11, wobei der Parameter, der mit dem Versatzwinkel (θ_{c}) der aufgebrachten Kalibrierungszugkraft korreliert, die Spannungsdifferenz zwischen dem Graphen, der einem Glasfaserdraht (2) entspricht, und dem Graphen, der dem anderen Glasfaserdraht (2) entspricht, ist.

## Revendications

1. Patte équipée de capteurs (1) pour mesurer la force de traction, la patte (1) comprenant un corps formé par deux faces latérales (11) et un bord (12) situé entre celles-ci qui est percé d'un trou (O) conçu pour accrocher un câble, **caractérisée en ce qu'**elle comprend en outre deux fils de fibre optique (2) équipés chacun d'une pluralité de capteurs de contrainte individuels de type réseau de Bragg sur fibre (21) fixés le long du bord (12), dans laquelle les deux fils de fibre optique (2) sont disposés en parallèle dans des positions symétriques par rapport à un plan de symétrie de la patte (1).

2. Patte équipée de capteurs (1) selon la revendication 1, comprenant en outre de la colle pour effectuer la fixation des fils de fibre optique (2).

3. Patte équipée de capteurs (1) selon l'une quelconque des revendications précédentes dans laquelle le bord (12) comprend deux rainures (13) à l'intérieur desquelles sont disposés les fils de fibre optique (2).

4. Patte équipée de capteurs (1) selon la revendication 3, comprenant en outre un matériau d'étanchéité résistant à l'humidité qui recouvre chaque rainure (13) avec le fil de fibre optique (2) à l'intérieur.

5. Procédé de mesure de la force de traction supportée par une patte équipée de capteurs (1) selon l'une quelconque des revendications précédentes, **caractérisé en ce qu'il** comprend les étapes suivantes :
a. effectuer un processus d'étalonnage initial de la patte (1), comprenant la détermination des contraintes sur chaque capteur de contrainte individuel (21) des deux fils de fibre optique (2) fixés au bord (12) de la patte (1), lorsque des forces de traction d'étalonnage de différentes quantités (T _{c}), différents angles de traction (α _{c}), et éventuellement, différents angles de décentrage (θ _{c}) sont appliqués à ladite patte (1), et la corrélation desdites contraintes déterminées par chaque capteur de contrainte individuel (21) avec la quantité (T _{c}), l'angle de traction (α _{c}) et, le cas échéant, l'angle de décentrage (θ _{c}) de la contrainte de traction d'étalonnage appliquée ; et
b. ensuite, déterminer la quantité (T), l'angle de traction (α) et, le cas échéant, l'angle de décentrage (θ) de la force de traction supportée par la patte (1) lors de l'utilisation normale à partir des contraintes obtenues par les capteurs de contrainte individuels (21) des deux fils de fibre optique (2), à l'aide des corrélations obtenues dans le processus d'étalonnage initial.

6. Procédé selon la revendication 5, comprenant la détermination de la valeur de la quantité (T) de la force de traction appliquée au moyen des étapes suivantes :
- construire des graphiques composites de contrainte en fonction de la position angulaire en faisant la moyenne du graphique correspondant à un fil de fibre optique (2) et du graphique correspondant à l'autre fil de fibre optique (2) pour un ensemble de forces de traction d'étalonnage avec quantités différentes (To) ;
- déterminer un paramètre des graphiques composites qui est en corrélation avec la quantité (T _{c}) de la force de traction d'étalonnage appliquée ;
- calculer le rapport de corrélation entre ledit paramètre et la quantité (T _{c}) de la force de traction d'étalonnage appliquée ; et
- ensuite, lors de l'utilisation normale de la patte (1), déterminer la valeur de la quantité (T) d'une force de traction appliquée à partir des contraintes mesurées par les fils de fibre optique (2) et du rapport de corrélation calculé à l'étape précédente.

7. Procédé selon la revendication 6, dans lequel le paramètre qui est en corrélation avec la quantité (T _{c}) de la force de traction d'étalonnage appliquée est la valeur de la contrainte maximale dans le graphique de contrainte en fonction de la position angulaire.

8. Procédé selon l'une quelconque des revendications 6 à 7, comprenant en outre la détermination de la valeur de l'angle de traction (α) de la force de traction appliquée au moyen des étapes suivantes :
- construire des graphiques composites de contrainte en fonction de la position angulaire en faisant la moyenne du graphique correspondant à un fil de fibre optique (2) et du graphique correspondant à l'autre fil de fibre optique (2) pour un ensemble de forces de traction d'étalonnage avec différents angles de traction (α _{c}) ;
- déterminer un paramètre des graphiques composites qui est en corrélation avec l'angle de traction (α _{c}) de la force de traction d'étalonnage appliquée ;
- calculer le rapport de corrélation entre ledit paramètre et l'angle de traction (α _{c}) de la force de traction d'étalonnage appliquée ; et
- ensuite, lors de l'utilisation normale de la patte (1), déterminer la valeur de l'angle de traction (α) d'une force de traction appliquée à partir des contraintes mesurées par les fils de fibre optique (2) et du rapport de corrélation calculé à l'étape précédente.

9. Procédé selon la revendication 8, dans lequel le paramètre en corrélation avec l'angle de traction (α _{c}) de la force de traction d'étalonnage appliquée est choisi parmi : la position du maximum du graphique de contrainte composite en fonction de la position angulaire ; et la pente dudit graphique de contrainte composite en fonction de la position angulaire à des positions angulaires supérieures à celle à laquelle se trouve le maximum.

10. Procédé selon la revendication 9, dans lequel la pente du graphique de contrainte composite en fonction de la position angulaire est prise à des positions angulaires au moins 4° supérieures à celle à laquelle se trouve le maximum dans ledit graphique.

11. Procédé selon l'une quelconque des revendications 6 à 10, comprenant en outre la détermination de la valeur de l'angle de décentrage (θ _{c}) au moyen des étapes suivantes :
- construire un graphique de la contrainte mesurée en fonction de la position angulaire pour chaque fil de fibre optique (2) pour un ensemble de forces de traction d'étalonnage avec différents angles de décentrage (θ _{c}) ;
- déterminer un paramètre de la paire de graphiques qui est en corrélation avec l'angle de décentrage (θ _{c}) de la force de traction d'étalonnage appliquée ;
- calculer le rapport de corrélation entre ledit paramètre et l'angle de décentrage (θ _{c}) de la force de traction d'étalonnage appliquée ; et
- lors de l'utilisation normale de la patte (1), déterminer la valeur de l'angle de décentrage (θ) d'une force de traction appliquée à partir des contraintes mesurées par les fils de fibre optique (2) et du rapport de corrélation calculé.

12. Procédé selon la revendication 11, dans lequel le paramètre en corrélation avec l'angle de décentrage (θ _{c}) de la force de traction d'étalonnage appliquée est la différence de contrainte entre le graphique correspondant à un fil de fibre optique (2) et le graphique correspondant à l'autre fil de fibre optique (2).
